# EUROPEAN PATENT APPLICATION

(11) **EP 4 350 291 A1**
(43) Date of publication of application: **10.04.2024**
(21) Application number: 21944069.0
(22) Date of filing: 31.05.2021
(51) Int. Cl.: G01C 21/26

(54) **INFORMATION PROCESSING DEVICE, INFORMATION PROCESSING METHOD, AND INFORMATION PROCESSING PROGRAM**

(71) Applicant: Pioneer Corporation, Tokyo 113-0021 (JP)
(72) Inventor: TABUCHI, Hiromasa, Tokyo 112-0002 (JP); NAKAGAWA, Takeshi, Kawagoe-shi, Saitama 350-8555 (JP); NAGATA, Hitoshi, Kawagoe-shi, Saitama 350-8555 (JP)
(74) Representative: Hoffmann Eitle
(86) International application number: PCT/JP2021/020763
(87) International publication number: WO 2022/254561

(57) **Abstract**

An information processing device (100) includes an acquisition unit (132) acquiring area information that indicates a geographical position or a geographical range where a reproduction output of content information is to be ended, and a determination unit (134) determining output start timing when the reproduction output of the content information is to be started in a traveling vehicle based on reproduction time of the content information and the area information.

## Description

### TECHNICAL FIELD

The present invention relates to an information processing device, an information processing method, and an information processing program.

### BACKGROUND ART

Conventionally, a technique is known that outputs information such as warning information, route guidance information, road traffic information, sightseeing guidance information, advertisement information to a driver in a traveling vehicle as voice information.

Meanwhile, hearing of these pieces of voice information may become difficult when timing of a reproduction output is overlapped, or these pieces of voice information may disturb driving. Therefore, a reproducing mechanism is proposed to schedule timing of reproduction outputs of these pieces of voice information in such a manner that the reproduction outputs do not interfere with one another.

### CITATION LIST

### PATENT LITERATURE

[Patent Document 1] Japanese Patent Application Publication No. 2013-221837

### SUMMARY

### TECHNICAL PROBLEM

However, a conventional technique described above involves, as an example, a problem in that it may be impossible to start a reproduction output of content information in a vehicle at appropriate timing such that the reproduction output of the content information ends at a predetermined point.

For example, the conventional technique described above calculates, in a case where reproduction of a plurality of pieces of voice information may interfere with one another, a degree of loss due to not being reproduced and delay of the reproduction based on meta information regarding each combination of reproduction orders of these pieces of voice information and selects reproduction orders for a combination in which the degree of loss is minimum.

Thus, in the conventional technique described above, a point at which the reproduction output of the content information is to be ended is not determined, so that there exists no concept of determining at what timing the reproduction output of the content information is to be started to successfully end the reproduction output at such a point.

Therefore, in the conventional technique described above, it may be impossible to start the reproduction output of the content information in the vehicle at the appropriate timing such that the reproduction output of the content information ends at the predetermined point.

The present invention is made in view of the above, and aims at providing an information processing device, an information processing method, and an information processing program that are capable of starting a reproduction output of content information in a vehicle at appropriate timing such that the reproduction output of the content information ends at a predetermined point.

### SOLUTION TO PROBLEM

The information processing device according to claim 1 includes:
an acquisition unit acquiring area information that indicates a geographical position or a geographical range where a reproduction output of content information is to be ended; and
a determination unit determining output start timing when the reproduction output of the content information is to be started in a traveling vehicle based on reproduction time of the content information and the area information.

The information processing method according to claim 12 is executed by an information processing device, wherein the information processing method includes:
an acquisition step of acquiring area information that indicates a geographical position or a geographical range where a reproduction output of content information is to be ended; and
a determination step of determining output start timing when the reproduction output of the content information is to be started in a traveling vehicle based on reproduction time of the content information and the area information.

The information processing program according to claim 13 is executed by an information processing device provided with a computer, wherein the information processing program causes the computer to function as
an acquisition means for acquiring area information that indicates a geographical position or a geographical range where a reproduction output of content information is to be ended, and
a determination means for determining output start timing when the reproduction output of the content information is to be started in a traveling vehicle based on reproduction time of the content information and the area information.

### BRIEF DESCRIPTION OF DRAWINGS

FIG. 1 is a diagram illustrating an example of a system according to an embodiment.
FIG. 2 is a diagram illustrating an example of an information matching process.
FIG. 3 is a diagram illustrating a configuration example of an information processing device according to an embodiment.
FIG. 4 is a diagram illustrating an example of a content database according to an embodiment.
FIG. 5 is a diagram illustrating an example of a travel information database according to an embodiment.
FIG. 6 is a diagram illustrating an example of information processing according to an embodiment.
FIG. 7 is an explanatory diagram to explain a determination process in a case where overlap is detected between areas corresponding to candidates of output start timing.
FIG. 8 is a flowchart illustrating an information processing procedure according to an embodiment.
FIG. 9 is a hardware configuration diagram illustrating an example of a computer that implements a function of an information processing device 100.

### DESCRIPTION OF EMBODIMENTS

With reference to the drawings, the following describes embodiments for carrying out the present invention (hereinafter referred to as "embodiments"). The present invention is not limited by the embodiments described below. Further, the drawings are illustrated with identical parts marked with the identical signs.

In addition, in the following embodiments, it is possible to read a vehicle, a traveling situation, and a traveling speed as a "mobile object", a "moving situation", and a "moving speed", respectively. Further, an expression "to be reproduced and output in a vehicle" includes a meaning of "to be reproduced and output to a terminal device moving with a vehicle". In addition, an expression "a vehicle performs output control to reproduce and output content information" includes a meaning of "output control for a terminal device, and provision (output) of content information to a user of a vehicle".

### [1. Introduction]

An example of a terminal device that moves with a vehicle may be a terminal device mounted in the vehicle (for example, an in-vehicle device), or a terminal device such as a smartphone owned by a user (for example, a passenger of a vehicle such as a driver), and an application that provides various types of contents to such a terminal device is known.

For example, there is an application providing the content information of a content corresponding to a traveling state of the vehicle or a situation of the user driving the vehicle, or the content information that guides a route according to various types of inputs (for example, a text input or a voice input) to assist driving of the user. In addition, there also exists an application providing various types of content information such as sightseeing guidance, shop guidance, advertisement information, or other useful information according to travelling of the vehicle to assist more pleasant driving.

Herein, the application may be classified into specific types depending on what category of the content information that is capable of being provided. For example, the application for Advanced Driver-Assistance Systems (ADAS) provides the content information categorized into "warning" or "attention", and hence, is classified into a type such as "ADAS" or "safety assistance". On the other hand, the application for various types of guidance (for example, road guidance, tourism guidance or the like) provides the content information categorized into "guidance", and hence, is classified into a type such as "guidance assistance". Further, the application for shop information (for example, advertisement regarding a shop) provides the content information categorized into "advertisement", and hence, is classified into a type such as "advertisement provision".

In addition, the application passes the content information to be provided to the user to an information matching engine described later (specifically, a computer mounted with an information matching engine), so as to reproduce and output the content information via the information matching engine. At this time, the application imparts range information indicating a range to be reproduced and output, category information indicating a category of the content information, and meta information including a length of the content information (reproduction time) to the content information.

The range information indicating the range to be reproduced and output corresponds to condition information that designates a geographical range, a time range, a traveling distance range of the vehicle, a passing area range of the vehicle, and a speed range of the vehicle or the like in which the content information is to be reproduced and output and conditions to allow the reproduction output of the content information within such a range. Although the following embodiment is explained by focusing on area information (one example of range information) indicating the geographical range in which the content information is to be reproduced and output, information processing according to the embodiment is applicable even in ranges other than the geographical range, that is, the time range, the traveling distance range of the vehicle, the passing area range of the vehicle, and the speed range of the vehicle.

Further, in a case where each application thus sets the geographical range, a portion or the entirety of the geographical range may overlap between applications. Then, a problem occurs in such a manner that the reproduction outputs interfere with one another among pieces of content information corresponding to respective geographical ranges in an overlapping relationship. In addition, the content information is configured as a voice message in consideration of a fact that the user of a providing destination is a passenger of the vehicle, so that driving may be disturbed when the reproduction outputs interfere with one another. Thus, the computer provided with the information matching engine determines an appropriate output order or appropriate output timing according to control of the information matching engine. Further, the traveling situation of a traveling vehicle is sequentially changing, so that such a computer predicts the traveling situation, and performs prioritization (a priority order setting) to optimize the content information to be reproduced and output.

Further, depending on a determined priority or the output order, the content information that is discarded without being reproduced and output may be output. Hence, although the application tries to dynamically control (an output setting) a range in which its own content information is reproduced and output as effectively as possible, the computer provided with the information matching engine performs feedback corresponding to performance information regarding the reproduction output to the application, so that it is also possible to assist an output setting by the application.

### [2. System]

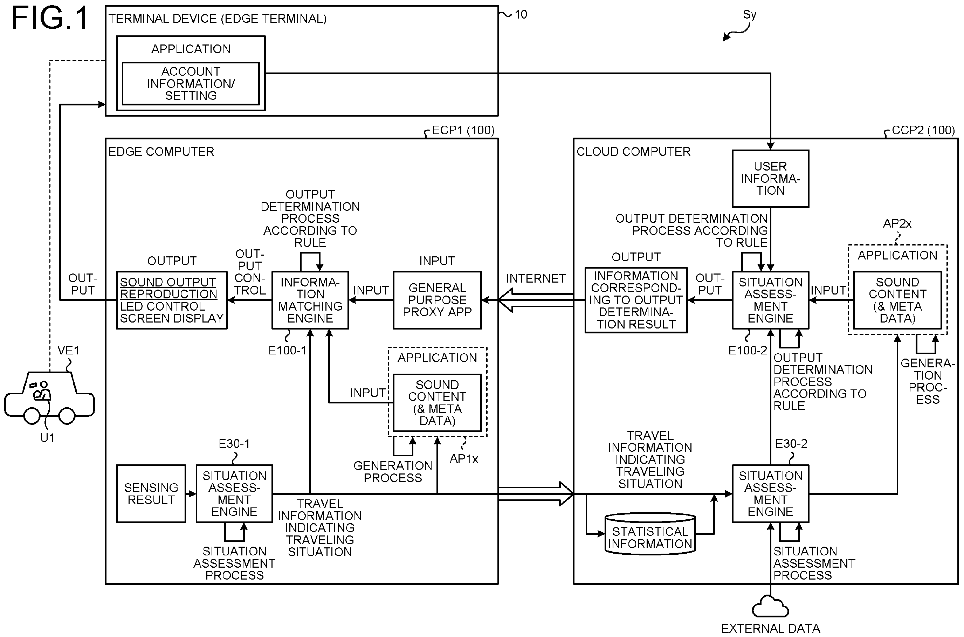

Next, with reference to FIG. 1, a system including the computer provided with the application, and the information matching engine described above will be explained. FIG. 1 is a diagram illustrating an example of the system according to the embodiment. FIG. 1 illustrates an information processing system Sy as an example of the system according to the embodiment. Information processing according to the embodiment described later is implemented by the information processing system Sy.

### (Terminal Device 10)

A terminal device 10 (an edge terminal) is an information processing terminal used by a user (a passenger of a vehicle). The terminal device 10 may be, for example, a stationary in-vehicle device mounted in the vehicle, or a portable terminal device owned by the user (for example, a smartphone, a tablet-type terminal, a laptop PC, a desktop PC, a PDA, or the like). In the present embodiment, the terminal device 10 is defined as the in-vehicle device.

Further, in the example of FIG. 1, the terminal device 10 is installed in a vehicle VE1 that is driven by a user U1, and reproduces and outputs the content information corresponding to the output control by the computer provided with the information matching engine. For example, the terminal device 10 includes a reporting unit (an output unit), and outputs the content information from this reporting unit. For example, the reporting unit may be a speaker or a display screen, and the terminal device 10 reproduces and outputs the content information (a sound content) in a voice message format via the speaker. Further, the reporting unit may be the display screen, and it is possible for the terminal device 10 to display information for supporting a content of the sound content on the display screen.

In addition, various types of applications such as an ADAS app, a navigation app, a music app, a delivery app, and an insurance app may be arbitrarily introduced to the terminal device 10 by the user, and it is possible for such an application to transmit user information including, for example, account information or setting information set by the user to a cloud computer CCP2 described later.

The application introduced to the terminal device 10 may be the app for the edge terminal corresponding to the application that provides the content information in the voice message format along with the range information (hereinafter, the application may be referred to as "an app according to an embodiment"), or may be any application that is different from the app according to the embodiment.

### (Edge Computer ECP1)

An edge computer ECP1 is a computer that executes data processing (edge processing) in the vicinity of the terminal device 10, and a situation assessment engine E30-1 and an information matching engine E100-1 are incorporated therein. In addition, according to the example of FIG. 1, the edge computer ECP1 is provided with an application AP1x (for example, an app AP11, an app AP12, an app AP13, ...) as the app according to the embodiment.

Although the application AP1x is provided inside the edge computer ECP1 in the example of FIG. 1, the application AP1x may be independent from the edge computer ECP1. In this case, for example, a server device (an app server) corresponding to the application AP1x may further be included in the information processing system Sy, while the edge computer ECP1 need not include the application AP1x therein.

Further, the application AP1x is the app providing the content information with a content having higher urgency in output to the user, so as to be incorporated in the edge computer ECP1 that exists in the vicinity of the terminal device 10. Thus, the content information provided from the application AP1x may be reproduced and output with a shorter time lag corresponding to the traveling situation of the vehicle VE1. In addition, hence, the application AP1x may be the app related to, for example, an ADAS, and provides the content information which is categorized into "warning" or "attention".

In addition, the edge computer ECP1 may further include a general purpose proxy app as illustrated in FIG. 1.

### (Cloud Computer CCP2)

The cloud computer CCP2 exists on a cloud side, and is, for example, a computer that performs various types of information provision in a push format, and a situation assessment engine E30-2 and an information matching engine E100-2 are incorporated therein. Further, according to the example of FIG. 1, the cloud computer CCP2 is provided with an application AP2x (for example, an app AP21, an app AP22, an app AP23, ...) as the app according to the embodiment.

Although the application AP2x is provided inside the cloud computer CCP2 in the example of FIG. 1, the application AP2x may be independent from the cloud computer CCP2. In this case, for example, the server device (the app server) corresponding to the application AP2x may further be included in the information processing system Sy, while the cloud computer CCP2 need not include the application AP2x therein.

In addition, the application AP2x may be the app providing the content information having relatively low urgency in output to the user. Therefore, the application AP2x is incorporated in the cloud computer CCP2 on the side of cloud which is distant from the terminal device 10. In addition, hence, the application AP2x may be the app related to, for example, guidance assistance or advertisement provision, and provides the content information which is categorized into "guidance" or "advertisement".

### (Specific Example of Information Processing)

Next, a specific example of a process executed by each of the application, a situation assessment engine, and an information matching engine according to the embodiment will be explained. In addition, hereinafter, the content information will be explained as the sound content. The content information is not limited to the sound content, and may be, for example, a video content.

First, a specific example of a process executed by the application according to the embodiment is explained. Contents of processes for both of the applications AP1x and AP2x are identical to each other, so that the application AP1x will be explained as an example herein.

The application AP1x executes personalization of the sound content to be provided for each user based on a usage history of the user. Further, the application AP1x executes a process to determine what kind of content of a voice message should be replied, based on a content of utterance indicated by voice input by the user, in such a manner that it is possible to implement a conversation with the user. In addition, it is also possible for the application AP1x to determine a voice content to be provided to the user or a content of a voice message to be replied to the user based on a situation of the user.

Further, the application AP1x executes a generation process to generate the sound content. For example, the application AP1x determines what kind of category to which the sound content that should be reproduced and output belongs, based on data received from the situation grasping device E30-1 (the situation assessment device E30-2 in a case of the application AP2x), and generates the sound content with a content that belongs to the determined category.

For example, the application AP1x generates the sound content with a content corresponding to the traveling situation of the vehicle assessed by the situation assessment device E30-1. The sound content generated by the generation process is, for example, text data which is a base of the voice message to be eventually reported to the user, and may define a content of the voice message which is converted into sound data later and acquired. That is, the application AP1x is not limited to generating the sound data as the sound content, and may generate data in another format which is a base of the voice message as the sound content.

In addition, it is also possible for the application AP1x to designate a timing when the sound content is reproduced and outputted. For example, it is possible for the application AP1x to generate the range information which indicates a range to allow the reproduction output of the sound content by using the geographical range, the time range, the traveling distance range of the vehicle, the passing area range of the vehicle, the speed range of the vehicle or the like in which the sound content is to be reproduced and output. Further, in such a case, the application AP1x requests (makes a reservation with) transmits the sound content to which the meta information including the range information is imparted to the information matching engine E100-1 (the information matching engine E100-2 in a case of the application AP2x) so as to request (make a reservation with) the terminal device 10 to reproduce and output the sound content under a condition indicated by the range information.

Next, a specific example of a process executed by the situation assessment engine. Contents of processed for both of the situation assessment engines E30-1 and E30-2 are identical to each other, so that the situation assessment engine E30-1 will be explained as an example herein.

The situation assessment engine E30-1 executes a situation assessment process which is an analytical process to assess the traveling situation of the vehicle. For example, the situation assessment engine E30-1 performs sensing of the traveling situation of the vehicle based on sensor information acquired from various types of sensors. Herein, the sensor may be, for example, a sensor installed in the vehicle or a sensor included in the terminal device 10, and an example of the sensor is an acceleration sensor, a gyro sensor, a magnetic sensor, a GPS, a camera, or a microphone, or the like.

For example, it is possible for the situation assessment engine E30-1 to execute a series of analytical processes described below. For example, the situation assessment engine E30-1 performs the sensing based on the sensor information acquired from the sensor described above, and executes a base analysis by using a sensing result as a core element. In the base analysis, the situation assessment engine E30-1 extracts needed data having the core element as an information source, and performs a conversion and processing of the extracted data. Next, the situation assessment engine E30-1 executes a high-order analysis by using data after the conversion and the processing. In the high-order analysis, the situation assessment engine E30-1 executes analysis of a specific traveling situation based on the data after the conversion and the processing. For example, the situation assessment engine E30-1 analyzes whether or not the vehicle is traveling on a straight road, whether or not the vehicle is taking a curve, the traveling speed, a traveling direction, a congestion situation or the like as the traveling situation of the vehicle.

According to the example of FIG. 1, the situation assessment engine E30-2 may use statistical information acquired by statistical processing with respect to a log regarding the traveling situation or a user operation for the situation assessment process.

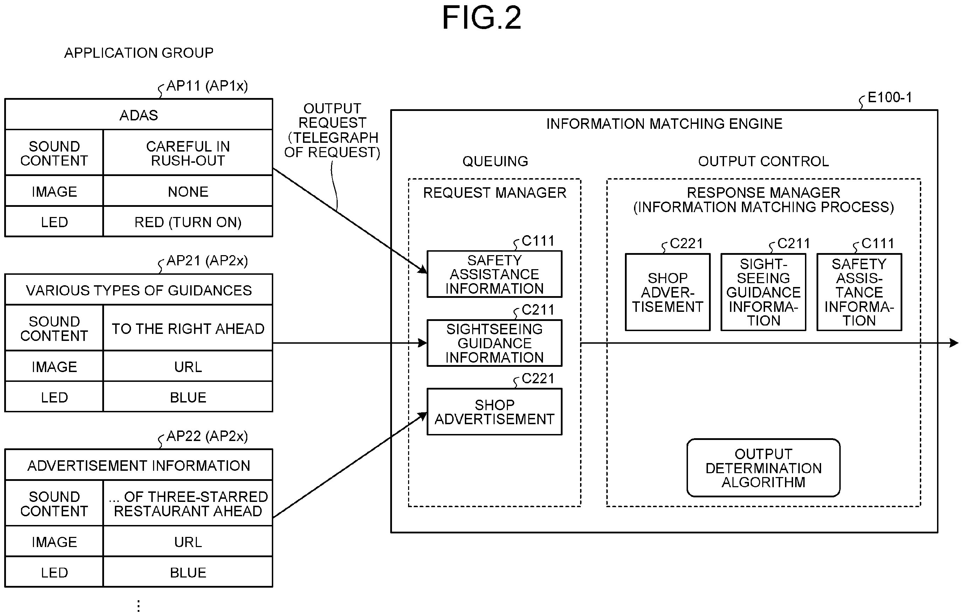

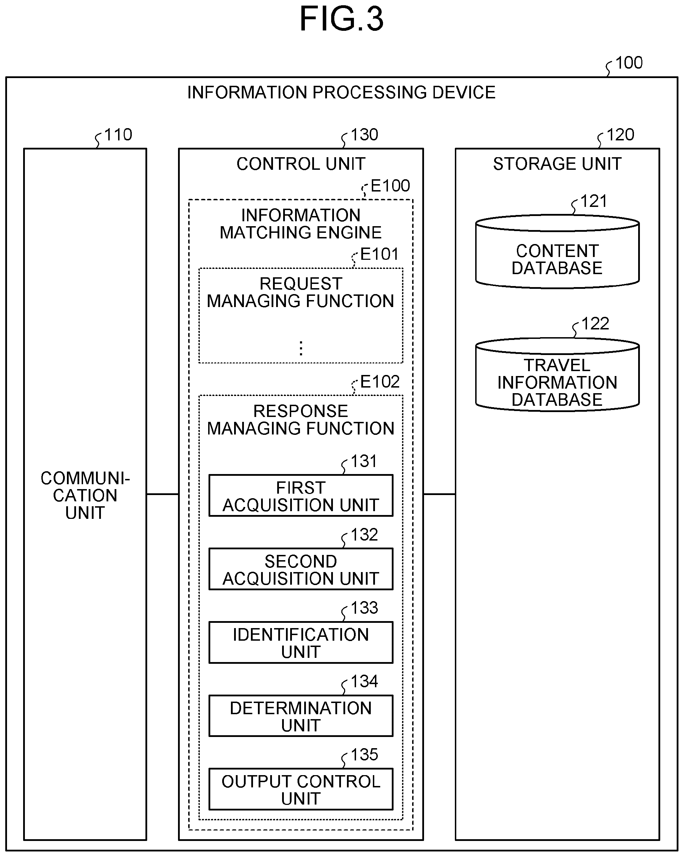

Next, a specific example of a process executed by the information matching engine will be explained. Contents of processes for both of the information matching engines E100-1 and E100-2 are identical to each other, so that the information matching engine E100-1 will be explained as an example herein. As illustrated in FIG. 2 or FIG. 3, the information matching engine E100-1 includes a request managing function or a response managing function.

The request managing function receives a request from the application AP1x (the application AP2x in a case of the information matching engine E100-2) and executes queuing corresponding to the received request. The request here may be an output request to request the reproduction and the output of the generated sound content, and is transmitted in a state in which, for example, the sound content is included. Further, the request managing function executes the queuing on the received sound content in a content buffer.

The response managing function executes an output determination process according to a rule. For example, the response managing function executes the output determination process in accordance with output determination algorithm. More specifically, the response managing function determines the priority and the output order with respect to what order sound contents which are reserved to be output are actually output in, based on the travel information indicating the traveling situation assessed by the situation assessment device E30-1 (the situation assessment engine E30-2 in a case of the information matching engine E100-2) or the range information included in the request. Then, the response managing function performs output control over the terminal device 10 to reproduce and output the sound contents in an output order according to the determined priority.

### [3. Flow of Information Processing]

Next, a flow of the information processing (information processing according to embodiment) implemented by the information processing system Sy will be explained with reference to FIG. 1. Herein, a scene is assumed in which the sound content is reproduced and output through the terminal device 10 corresponding to the in-vehicle device of the vehicle VE1 for the user U1 who is driving the vehicle VE1. In such a scene, the terminal device 10 transmits the sensor information detected by a sensor included in its own device to the edge computer ECP1 at any time.

In such a state, first, a flow of information having a starting point on a side of the edge computer ECP1 is illustrated. When the sensor information transmitted from the terminal device 10 is acquired, the situation assessment engine E30-1 included in the edge computer ECP1 executes a situation assessment process to assess the traveling state of the vehicle VE1. For example, the situation assessment engine E30-1 executes a series of pieces of analytical processes such as the sensing using the sensor information, the base analysis using the sensing result as the core element, and the high-order analysis using data acquired as a result of the base analysis so as to perform a detailed situation assessment process.

Then, the situation assessment engine E30-1 transmits the travel information indicating the traveling situation assessed by the situation assessment process to a utilization destination that uses the travel information. For example, the situation assessment engine E30-1 transmits the travel information to the information matching engine E100-1, the application AP1x, and the situation assessment engine E30-2. Herein, the traveling situation may be, for example, a position of the vehicle VE1, the traveling speed, the traveling direction or the like.

When the travel information is acquired from the situation assessment engine E30-1, the application AP1x executes the generation process to generate the sound content based on acquired travel information. For example, the application AP1x generates the sound content with the content corresponding to the traveling situation of the vehicle VE1 based on the travel information acquired from the situation assessment engine E30-1. Further, the application AP1x generates the range information which indicates the range to allow the reproduction output of the sound content by using the geographical range, the time range, the traveling distance range of the vehicle VE1, the passing area range of the vehicle VE1, the speed range of the vehicle or the like in which the sound content is to be reproduced and output, and imparts the meta information including the generated range information to the sound content. Then, the application AP1x inputs the sound content to which the meta information is imparted to the information matching engine E100-1.

When the travel information is acquired from the situation assessment engine E30-1, the situation assessment engine E30-2 executes the situation assessment process to assess the traveling situation of the vehicle VE1 based on the acquired travel information. For example, the travel information acquired from the situation assessment engine E30-1 is accumulated in a predetermined database included in the cloud computer CCP2. In addition, the log regarding a user operation may be accumulated in such a database, and the situation assessment engine E30-2 executes the statistical processing with respect to the travel information or the operation log that have been accumulated, so as to execute the situation assessment process to assess the traveling state of the vehicle VE1 by using the statistical information indicating a result of the statistical processing and external data acquired from an outside.

Herein, the external data exists in the cloud so as to be acquirable data, and is useful data for assessing the traveling situation. For example, the external data may be weather information indicating a condition of weather, traffic information indicating a traffic condition, or road information indicating a road state. Of course, the external data is not limited to these examples.

Then, the situation assessment engine E30-2 transmits the travel information indicating the traveling situation assessed by the situation assessment process to the utilization destination that utilizes the travel information. For example, the situation assessment engine E30-2 transmits the travel information to the information matching engine E100-2 and the application AP2x. Herein, the traveling situation may be, for example, the position of the vehicle VE1, the traveling speed, the traveling direction, or the like.

Further, while the situation assessment process is executed between the situation assessment engine E30-1 and the situation assessment engine E30-2 and the generation process is executed between the application AP1x and the application AP2x, an information matching process is executed from the information matching engine E100-2 to the information matching engine E100-1 accordingly. For example, from the information matching engine E100-2 to the information matching engine E100-1, the information matching process is executed such that the sound contents in an optimum combination among the sound contents of output candidates generated by the generation process are output in the optimum order.

For example, the area information (one example of range information) indicating the geographical range to be reproduced and output is associated with each sound content generated by the generation process as the meta information. Therefore, in the information matching process, the priority of the reproduction output is calculated with respect to each of a plurality of sound contents based on the travel information indicating the traveling situation assessed by the situation assessment process. In addition, in the information matching process, the output order of the combination of the sound contents corresponding to the priority is determined based on the reproduction time of each of the plurality of sound contents, the area information, and the travel information. Then, the output control is performed such that the sound contents included in this combination are reproduced and output in the order not to interfere with each other depending on the determined output order.

Further, the area information indicating the geographical position or the geographical range where the reproduction output is to be ended may be associated with the sound content as the meta information. In such a case, in the information matching process, an output start timing when the reproduction output is started may be determined based on the reproduction time of each of the plurality of sound contents and the area information.

Hereinafter, the information matching process and an example of the output control process corresponding to a result of the information matching process will be explained with reference to the example of FIG. 1.

First, the information matching engine E100-1 executes an output determination process in accordance with the area information (rule) corresponding to each of the sound contents inputted from the application AP2x where the area information indicates the geographical range in which the sound contents are to be reproduced and outputted. For example, the response managing function included in the information matching engine E100-2 performs the output determination process according to output determination algorithm.

More specifically, the response managing function determines the priority and the output order with respect to what order the sound contents which are reserved to be output are actually output in, in consideration of the travel information indicating the traveling situation assessed by the situation assessment engine E30-2 and the reproduction time of each of sound contents. For example, the response managing function determines the output order in the combination of the sound contents corresponding to the priority. As illustrated in FIG. 1, the response managing function may execute the output determination process by further using the user information transmitted from the application inserted in the terminal device 10.

Then, the information matching engine E100-2 outputs the information determined by the response managing function to the edge computer ECP1 as the information corresponding to an output determination result. The information output to the edge computer ECP1 is input to the information matching engine E100-1 through the general purpose proxy app of the edge computer ECP1.

The information matching engine E100-2 executes an output determination process in accordance with the area information (rule) corresponding to each of the sound contents input from the application AP1x and the sound contents indicated by the combination input from a side of the information matching engine E100-2 as the output determination result. For example, the response managing function included in the information matching engine E100-1 executes the output determination process according to the output determination algorithm.

More specifically, the response managing function determines the final priority and the output order with respect to what order the sound contents which are reserved to be output are actually output in, also in consideration of the travel information indicating the traveling situation assessed by the situation assessment engine E30-1, the reproduction time of each of the sound contents, and information (priority and output order) determined on a side of the information matching engine E100-2. For example, the response managing function determines the output order in the combination of the sound contents corresponding to the priority.

Then, the information matching engine E100-2 performs an output control over the terminal device 10 to reproduce and output the sound contents in the output order corresponding to the determined priority. The terminal device 10 reproduces and outputs the sound contents in an order such that the sound contents included in the combination corresponding to the priority do not interfere each other, according to such output control.

According to the example of FIG. 1, it is also possible for the information matching engine E100-2 to perform LED control over the terminal device 10 to perform LED light emission corresponding to the category to cause the user to recognize, for example, what category the sound contents currently being reproduced and output belong to. Further, according to the example of FIG. 1, it is also possible for the information matching engine E100-2 to perform display control over the terminal device 10 to display information for supporting the content of the sound contents on the display screen.

### [4. Specific Example of Information Matching Process]

Next, the information matching process executed by the information matching engine E100-1 will be explained in more detail with reference to a specific example. FIG. 2 is a diagram illustrating an example of the information matching process. FIG. 2 illustrates a scene in which the information matching process is executed by the information matching engine E100-1.

FIG. 2 illustrates an example where an application AP11 that is the application related to an ADAS existing in the edge computer ECP1 generates a sound content C111 (safety assistance information C111) with a message content of "careful in rush-out", and transmits an output request to request to reproduce and output the generated sound content C111 to the information matching engine E100-1 to reserve (request) the reproduction output.

Further, FIG. 2 illustrates an example where an application AP21 that is the application related to the guidance assistance existing in the cloud computer CCP2 generates a sound content C211 (sightseeing guidance information C211) with a message content of "to the right ahead", and transmits the output request to request to reproduce and output the generated sound content C211 to the information matching engine E100-1 to reserve (request) the reproduction output.

In addition, FIG. 2 illustrates an example where an application AP22 that is the application related to the advertisement provision existing in the cloud computer CCP2 generates a sound content C221 (shop advertisement C221) with a message content of"... of a three-starred restaurant ahead", and transmits an output request to request to reproduce and output the generated sound contents C221 to the information matching engine E100-1 to reserve (request) the reproduction output.

Further, in the example of FIG. 2, the request managing function of the information matching engine E100-1 executes the queuing corresponding to the output request received from each of the application AP11, AP21, and AP22. For example, the request managing function executes the queuing in the content buffer with respect to the sound contents C111, C211, and C221 received with the output request.

In addition, the response managing function of the information matching engine E100-1 executes the output determination process according to the rule. For example, the response managing function executes the output determination process according to the output determination algorithm. More specifically, the response managing function determines the priority and the output order with respect to what order which sound content of the respective sound contents is to be output in, based on the travel information indicating the traveling situation assessed by the situation assessment engine E30-1, the area information included in the output request, and the reproduction time of each of the sound contents on which the output reservations are made. Then, the response managing function determines the output order with respect to the combination of the sound contents corresponding to the determined priority. Further, the response managing function performs the output control over the terminal device 10 to reproduce and output the sound contents corresponding to the combination in the determined output order.

### [5. Information Processing Device according to Embodiment]

FIG. 1 illustrates an example where the information processing according to the embodiment is executed between the edge computer ECP1 and the cloud computer CCP2. Hereinafter, the computer including the information matching engine E100-1 or the information matching engine E100-2 will be explained as the information processing device 100 according to the embodiment.

The information processing device 100 may be the server device corresponding to the edge computer ECP1, or the server device corresponding to the cloud computer CCP2. Further, the information processing device 100 may be a single server device configured to integrate a function included in the edge computer ECP1 and a function included in the cloud computer CCP2.

For example, the information processing device 100 acquires the area information indicating a geographical position or a geographical range where the reproduction output of the content information is to be ended, and determines the output start timing to start the reproduction output of the content information in the traveling vehicle based on the reproduction time of the content information and the area information.

The information processing device 100 may perform the feedback to the application based on the performance information regarding the reproduction output of the content information.

### [6. Configuration of Information Processing Device]

First, the information processing device 100 will be explained in more detail with reference to FIG. 3. FIG. 3 is a diagram illustrating a configuration example of the information processing device 100 according to the embodiment. As illustrated in FIG. 3, the information processing device 100 includes a communication unit 110, a storage unit 120, an application APx, and a control unit 130.

### (Communication Unit 110)

The communication unit 110 is implemented by, for example, NIC or the like. Then, the communication unit 110 is connected to a network in wired or wireless manner, and performs transmission and reception of information, for example, between the terminal device 10 and the communication unit 110.

### (Storage Unit 120)

The storage unit 120 is implemented by, for example, a semiconductor memory element such as a Random Access Memory (RAM) or a flash memory, or a storage device such as a hard disk or an optical disk. The storage unit 120 includes a content database 121 (a content buffer) and a travel information database 122.

### (Content Database 121)

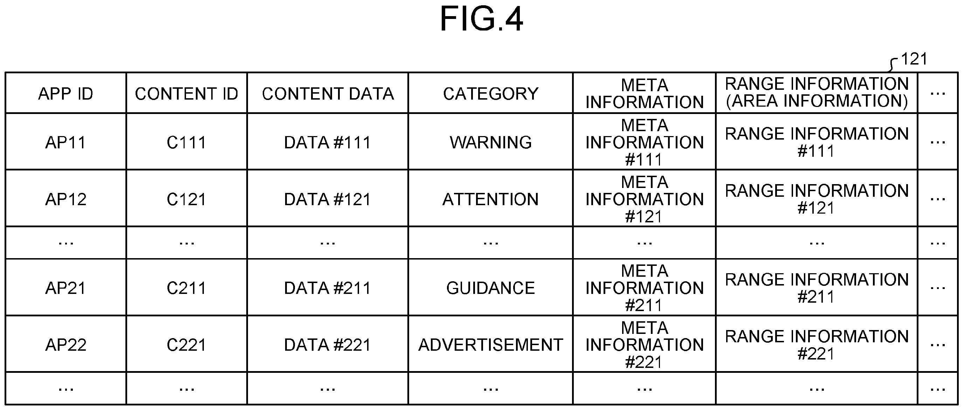

The content database 121 stores various types of information regarding the content information. Herein, an example of the content database 121 according to the embodiment is illustrated in FIG. 4. In the example of FIG. 4, the content database 121 includes items such as "app ID", "content ID", "content data", "category", "meta information", and "range information".

The "app ID" indicates identification information to identify the application (the application capable of providing content information) according to the embodiment. The "content ID" indicates the identification information to identify the content information (the sound content) generated by the application indicated by the "app ID".

The "content data" are the content information generated by the application indicated by the "app ID". The "category" indicates a category to which the content information generated by the application indicated by the "app ID" belongs. The "category" includes warning, attention, guidance, advertisement, entertainment, or the like.

The "meta information" is imparted to this content information in a state in which the area information that indicates the geographical position or the geographical range where the reproduction output of the content information is to be ended, the category information that indicates the category of the content information, the length of the content information (the reproduction time), and the like.

The "range information" corresponds to the condition information that conditions the geographical position or the geographical range where the reproduction output of the content information is to be ended. Specifically, the geographical position at which the reproduction output of the content information is to be ended corresponds to the condition information that conditions what position on the road the reproduction output of the content information is to be ended at. The geographical range in which the reproduction output of the content information is to be ended corresponds to the condition information that conditions what range on the road the reproduction output of the content information is to be ended in. The geographical position or the geographical range may be set by the application according to the embodiment.

That is, the example of FIG. 4 illustrates an example where the application (the application AP11) identified by an app ID "AP11" is the content information (the content information C111) identified by a content ID "C111", and generates the content information composed of data #111.

Further, the example of FIG. 4 illustrates an example where the content information C111 is categorized into a category "warning" is illustrated based on a content illustrated by the data #111.

In addition, the example of FIG. 4 illustrates an example where meta information #111 is imparted to the content information C111 and the area information indicating the geographical position or the geographical range where the reproduction output of the content information C111 is to be ended is included in this meta information #111.

Although a conceptual sign such as "#111" is used for ease of explanation in the example of FIG. 4, valid information that corresponds to each item is input actually.

### (Travel Information Database 122)

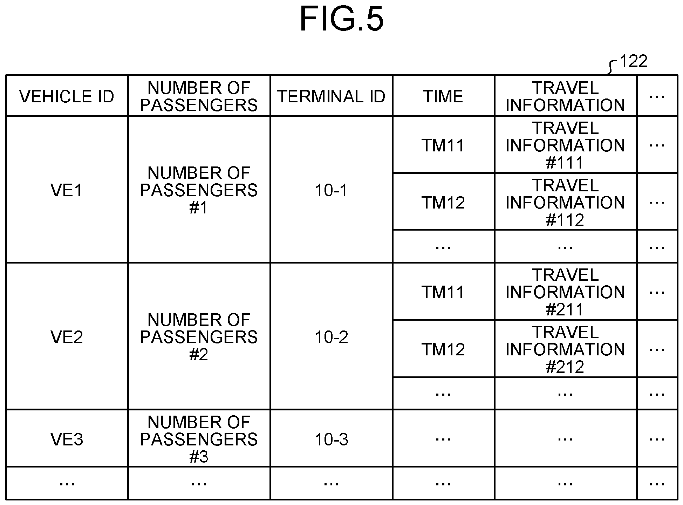

The travel information database 122 stores the travel information regarding the traveling situation of the vehicle. Herein, FIG. 5 illustrates an example of the travel information database 122 according to the embodiment. In the example of FIG. 5, the travel information database 122 includes items such as "vehicle ID", "number of passengers ", "terminal ID", "time", and "travel information".

The "vehicle ID" indicates the identification information that identifies the vehicle. The "number of passengers" indicates the number of passengers riding the vehicle that is identified by the "vehicle ID".

The "terminal ID" indicates the identification information identifying the terminal device 10 (in-vehicle device) installed in the vehicle identified by the "vehicle ID".

The "time" indicates a date and time when the "travel information" is acquired. The "travel information" is the traveling situation of the vehicle identified by the "vehicle ID", and indicates the traveling situation at the date and time indicated by the "time".
Further, the traveling situation indicates, for example, whether or not the vehicle is traveling on the straight road, whether or not the vehicle is taking a curve, the traveling speed, a traveling position, the traveling direction, and the congestion situation.

### (Application APx)

Back to FIG. 3, the application APx corresponds to the application AP1x or AP2x according to the embodiment explained in FIG. 1.

### (Control Unit 130)

The control unit 130 is implemented by an Application Specific Integrated Circuit (ASIC), a Field Programmable Gate Array (FPGA), or the like where various types of programs (for example, an information processing program according to the embodiment) stored in the storage device inside the information processing device 100 is executed while the RAM is provided as a working area. Further, the control unit 130 is implemented by, for example, an integrated circuit, such as an Application Specific Integrated Circuit (ASIC) or a Field Programmable Gate Array (FPGA).

As illustrated in FIG. 3, an information matching engine E100 is mounted in the control unit 130. The information matching engine E100 corresponds to the information matching engine E100-1or E100-2 explained in FIG. 1. A request managing function E101 and a response managing function E102 are included in the information matching engine E100.

The request managing function E101 may include a request receiving unit or a queuing unit although no illustration thereof is provided in FIG. 3. Further, as illustrated in FIG. 3, the response managing function E102 includes a first acquisition unit 131, a second acquisition unit 132, an identification unit 133, a determination unit 134, and an output control unit 135.

### (First Acquisition Unit 131)

The first acquisition unit 131 acquires the travel information regarding the traveling situation of the vehicle. For example, the first acquisition unit 131 acquires the travel information indicating the traveling situation of the vehicle assessed by the situation assessment process by the situation assessment device E30-1 (E30-2).

### (Second Acquisition Unit 132)

The second acquisition unit 132 acquires the area information that indicates the geographical position or the geographical range where the reproduction output of the content information is to be ended. For example, the second acquisition unit 132 acquires the area information that conditions a predetermined point in front of a target point corresponding to the content information as the geographical position, or a predetermined distance and width in front of the target point corresponding to the content information as the geographical range. For example, the area information is transmitted by the application APx with the content information in a state in which the area information is included in the meta information. Therefore, the second acquisition unit 132 acquires the content information input by the application APx, so that it is also possible to acquire the area information.

### (Identification Unit 133)

The identification unit 133 identifies the vehicle of a distribution destination to which the content information is distributed based on the travel information regarding the traveling situation of the vehicle. The vehicle of the distribution destination to which the content information is distributed designates the terminal device 10 of the distribution destination to which the content information is distributed. Herein, the travel information may be the travel information acquired by the first acquisition unit 131.

Further, the identification unit 133 may identify the vehicle of the distribution destination among the vehicles traveling on the road of a processing target based on the travel information of each vehicle traveling on the road of the processing target, or identify the vehicle of the distribution destination based on the statistical information (a statistical traveling situation) acquired from the travel information corresponding to each vehicle which traveled on the road of the processing target in the past.

For example, the identification unit 133 extracts the vehicle that sets the target point corresponding to the content information (for example, a facility to be an advertisement target by content information) as the traveling direction based on the travel information, and identifies the extracted vehicle as the vehicle of the distribution destination. Regarding this point, for example, it is possible for the identification unit 133 to identify the vehicle that is predicted to reach the geographical position that is the position indicated by the area information, or the geographical range indicated by the area information in the future based on the travel information, and extract the identified vehicle as the vehicle that sets the target point as the traveling direction.

Further, for example, the identification unit 133 may extract the vehicle traveling on a lane on a side on which the target point corresponding to the content information exists, based on the travel information, and identify the extracted vehicle as the vehicle of the distribution destination.

### (Determination Unit 134)

The determination unit 134 determines the output start timing when the reproduction output of the content information is started in the traveling vehicle based on the reproduction time of the content information and the area information. For example, the determination unit 134 determines the output start timing when the reproduction output of the content information is started in an interior of the vehicle of the distribution destination, based on the reproduction time of the content information, the area information, and the speed of the vehicle of the distribution destination.

For example, the determination unit 134 may estimate required time needed for the vehicle of the distribution destination to pass the position indicated by the area information based on predetermined information regarding the vehicle of the distribution destination, and determine the output start timing by further using the estimated required time. For example, it is possible for the determination unit 134 to estimate the required time needed for the vehicle of the distribution destination to pass the position indicated by the area information based on traffic congestion information at the position indicated by the area information. In addition, for example, it is possible for the determination unit 134 to estimate a statistical value of the required time which is needed to pass the position indicated by the area information as the required time needed for the vehicle of the distribution destination to pass the position indicated by the area information. Then, the determination unit 134 may estimate speed of the vehicle of the distribution destination at the position indicated by the area information based on the required time and the area information, and determine the output start timing by using the estimated speed.

### (Output Control Unit 135)

The output control unit 135 performs the output control over the terminal device 10 to reproduce and output the content information. For example, the output control unit 135 distributes the content information to the vehicle such that the content information is reproduced and output at the output start timing determined by the determination unit 134.

### [7. Specific Example of Information Processing according to Embodiment]

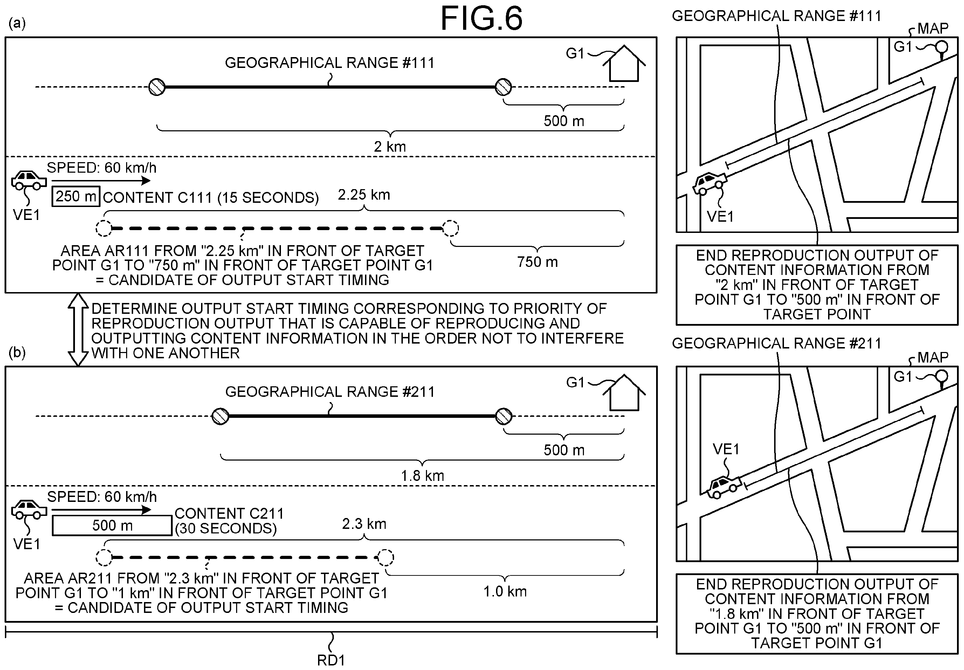

Hereinafter, FIG. 6 illustrates a specific example of the information processing (a determination process) according to the embodiment. FIG. 6 is a diagram illustrating an example of the information processing according to the embodiment.

Further, FIG. 6 illustrates the determination process in which the output start timing to start the reproduction output of the content information C111 and content information C211 is determined in the vehicle VE1 traveling on a road RD1 toward a target point G1 (from MAP of FIG. 6).

Further, according to the example of FIG. 6, the vehicle VE1 is traveling on the road RD1 at 60 km/h, and on the road RD1, geographical ranges that respectively correspond to two pieces of content information are set. Specifically, in the example of FIG. 6, the information processing device 100 acquires the content information C111 to which area information #111 indicating geographical range #111 on the road RD1 is imparted as the meta information, from the application AP11. According to the example of FIG. 6, the area information #111 corresponds to the condition information that conditions the reproduction output of the content information C111 to be ended in the area information #111 that is a range from "2 km" in front of the target point G1 to "500 m" in front of the target point G1.

Further, in the example of FIG. 6, the information processing device 100 acquires the content information C211 to which area information #211 indicating geographical range #211 on the road RD1 is imparted as the meta information, from the application AP21.
According to the example of FIG. 6, the area information #211 corresponds to the condition information that conditions the reproduction output of the content information C211 to be ended in a geographical range #211 that is a range from " 1.8 km" in front of the target point G1 to "500 m" in front of the target point G1.

Herein, in FIG. 6(a), the determination unit 134 determines the output start timing when the reproduction output of the content information C111 is started in the vehicle VE1, based on the reproduction time of the content information C111, the area information #111, and the traveling speed of the vehicle VE1 of the distribution destination. In the example of FIG. 6(a), the reproduction time of the content information C111 is "15 seconds", so that a traveling distance of the vehicle VE1 during the reproduction time is "250 m" when traveling at the speed of "60 km/h".

In such a case, it is possible for the determination unit 134 to determine the output start timing by using the geographical range #111 that is the range from "2 km" in front of the target point G1 to "500 m" in front of the target point G1, and the traveling distance of "250 m". For example, as the reproduction output of the content information C111 is started when the vehicle VE1 is located at "2.25 km" in front of the target point G1, the reproduction output is ended at a point at which the vehicle VE1 is located at "2.25 km" in front of the target point G1. In addition, for example, as the reproduction output of the content information C111 is started when the vehicle VE1 is located at "750 m" in front of the target point G1, the reproduction output is ended at a point at which the vehicle VE1 is located at "500 m" in front of the target point G1.

Therefore, in the example of FIG. 6(a), the determination unit 134 determines timing when the vehicle VE1 is located in an area connecting two boundary points described above which are fixed using a traveling distance of "250 m", that is, in an area AR111 from a point of "2.25 km" in front of the target point G1 to a point of "750 m" in front of the target point G1 as the output start timing.

Further, in FIG. 6(b), the determination unit 134 determines the output start timing when the reproduction output of the content information C211 is started in the vehicle VE1, based on the reproduction time of the content information C211, the area information #211, and the traveling speed of the vehicle VE1 of the distribution destination. In the example of FIG. 6(b), the reproduction time of the content information C211 is "30 seconds", so that the traveling distance of the vehicle VE1 during the reproduction time is "500m" when traveling at the speed of "60 km/h".

In such a case, it is possible for the determination unit 134 to determine the output start timing by using the geographical range #211 that is the range from "1.8 km" in front of the target point G1 to "500 m" in front of the target point G1, and the traveling distance of "500 m". For example, as the reproduction output of the content information C211 is started when the vehicle VE1 is located at "2.3 km" in front of the target point G1, the reproduction output is ended at a point at which the vehicle VE1 is located at "1.8 km" in front of the target point G1. In addition, for example, as the reproduction output of the content information C111 is started when the vehicle VE1 is located at "1 km" in front of the target point G1, the reproduction output is ended at a point at which the vehicle VE1 is located at "500 m" in front of the target point G1.

Therefore, in the example of FIG. 6(b), the determination unit 134 determines a timing when the vehicle VE1 is located in an area connecting two boundary points described above which are fixed using a traveling distance of "500 m", that is, in an area AR211 from a point of "2.3 km" in front of the target point G1 to a point of "1.0 km" in front of the target point G1 as the output start timing.

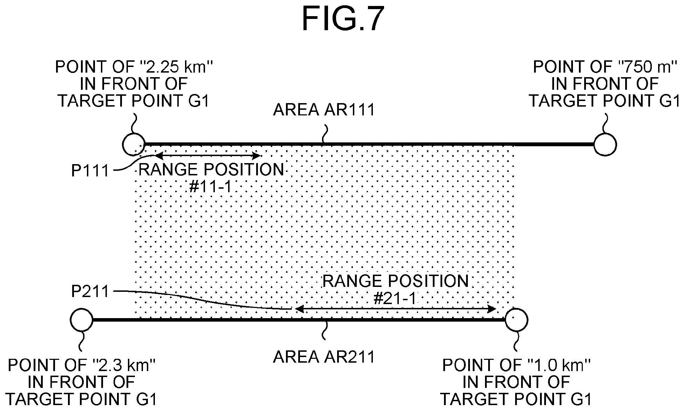

Herein, it is also possible for the determination unit 134 to determine the output start timing corresponding to the priority of the reproduction output where the output start timing allows the content information to be reproduced and output in an order not to interfere with each other. This point will be explained with reference to FIG. 7. FIG. 7 is an explanatory diagram to explain the determination process in a case where overlap is detected between areas corresponding to candidates of the output start timing.

According to the example of FIG. 7, the determination unit 134 compares an area AR111 with an area AR211 to detect the overlap of areas indicated by a dotted line between an area AR and the area AR211.

In such a state, the determination unit 134 determines the output start timing to allow each content information to be reproduced and output in the order not to interfere with each other on the precondition that the content information C111 is reproduced and output at timing when the vehicle VE1 is located in an area 111, and the content information C211 is reproduced and output at timing when the vehicle VE1 is located in an area 211, according to the traveling situation of the vehicle VE1. For example, the determination unit 134 determines the output start timing based on a relationship between the traveling distance of the vehicle VE1 and the overlap of areas, according to the reproduction time of each content information. In addition, at this time, it is possible for the determination unit 134 to determine the output order in consideration of the meta information imparted to each content information, or the priority calculated from the traveling situation of the vehicle VE1.

In the example of FIG. 7, the determination unit 134 calculates the priority of the content information C111 that is higher than that of the content information C211. In such a case, the determination unit 134 sets a range position #11-1 corresponding to the traveling distance of "250 m" of the vehicle VE1 traveling at "60 km/h" during the reproduction time of" 15 seconds" and a range position #21-1 corresponding to the traveling distance of "500 m" of the vehicle VE1 traveling during the reproduction time of "30 seconds" in a positional relationship of FIG. 7, in such a manner that these range positions do not overlap with each other, and according to the priority, .

Then, the determination unit 134 determines timing when the vehicle VE1 is located at a left end position P111 of the range position #11-1 as the output start timing when the reproduction output of the content information C111 is started. In addition, the determination unit 134 determines timing when the vehicle VE1 is located at a left end position P211 of the range position #21-1 as the output start timing when the reproduction output of the content information C211 is started.

### [8. Processing Procedure]

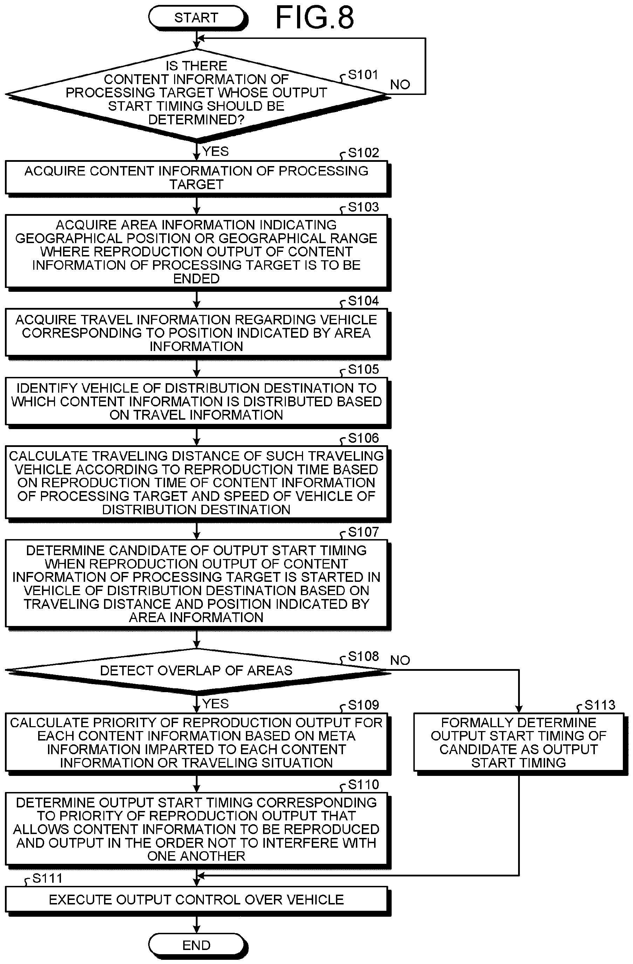

Next, a procedure of the information processing according to the embodiment will be explained with reference to FIG. 8. FIG. 8 is a flowchart illustrating an information processing procedure according to the embodiment.

First, the second acquisition unit 132 determines whether or not the content information of the processing target to determine the output start timing is input (step S101). In a case where the content information of the processing target is not input (step S101; No), the second acquisition unit 132 stands by until the content information of the processing target is input by the application APx.

On the other hand, in a case where it is determined that the content information of the processing target is input (step S101; Yes), the second acquisition unit 132 acquires the content information of the processing target (step S102). For example, the second acquisition unit 132 may acquire the content information of the processing target from the content database 121. In addition, by using the example of FIG. 6, it is herein assumed that the second acquisition unit 132 acquires the content information C111 and C211 as the content information of the processing target.

Then, the second acquisition unit 132 acquires the area information that corresponds to each of the content information C111 and C211 where the area information indicates the geographical position or the geographical range where the reproduction output is to be ended (step S103). According to the example of FIG. 6, the second acquisition unit 132 acquires the area information #111 as the area information corresponding to the content information C111. Further, the second acquisition unit 132 acquires the area information #211 as the area information corresponding to the content information C211.

Then, the first acquisition unit 131 acquires the travel information regarding the traveling situation with respect to the vehicle corresponding to the position indicated by the area information acquired at step S103 (step S104). For example, the first acquisition unit 131 acquires the travel information indicating the assessed traveling situation, according to the traveling situation that is assessed at any time by the situation assessment engine E30-1 (E30-2).

Further, according to the example of FIG. 6, the first acquisition unit 131 may acquire the travel information indicating the traveling situation of the vehicle traveling on the road RD1 including the geographical range #111 indicated by the area information #111, the vehicle traveling in the vicinity of the road RD1, or the vehicle that is predicted to enter the road RD1 ahead. Similarly, the first acquisition unit 131 may acquire the travel information indicating the traveling situation of the vehicle traveling on the road RD1 including the geographical range #211 indicated by the area information #211, the vehicle traveling in the vicinity of the road RD1, or the vehicle that is predicted to enter the road RD1 ahead.

Then, the identification unit 133 identifies the vehicle of the distribution destination to which the content information is distributed based on the travel information acquired at step S104 (step S105). For example, it is possible for the identification unit 133 to extract the vehicle that sets the target point corresponding to each of the content information C111 and C211 as the traveling direction, and identify the extracted vehicle as the vehicle of the distribution destination, based on the travel information. Further, it is possible for the identification unit 133 to extract the vehicle traveling on the lane on the side on which the target point corresponding to each of the content information C111 and C211 exists, and identify the extracted vehicle as the vehicle of the distribution destination, based on the travel information. In the example of FIG. 6, the identification unit 133 identifies the vehicle VE1 as the vehicle of the distribution destination according to the target point that is the target point G1.
Of course, although the identification unit 133 may identify a multiple number of vehicles as the vehicle of the distribution, it is herein assumed that the identification unit 133 identifies one vehicle VE1, for ease of explanation.

Then, the determination unit 134 calculates the traveling distance of the traveling vehicle according to the reproduction time based on the reproduction time of the content information of the processing target and the speed of the vehicle of the distribution destination (step S106). According to the example of FIG. 6, the determination unit 134 calculates the traveling distance of the traveling vehicle VE1 according to each reproduction time based on the reproduction time of each of the content information C111 and C211 and the speed of the vehicle VE1.

Then, the determination unit 134 determines a candidate of the output start timing when the reproduction output of the content information of the processing target is started in the vehicle of the distribution destination based on the traveling distance and the position indicated by the area information (step S107).

In the example of FIG. 6, it is possible for the determination unit 134 to determine the candidate of the output start timing by using the geographical range #111 from "2 km" in front of the target point G1 to "500 m" in front of the target point G1 and the traveling distance of "250 m". For example, it is possible for the determination unit 134 to determine the timing when the vehicle VE1 is located at a certain point in the area AR111 from the point of "2.25 km" in front of the target point G1 to the point of "750 m" in front of the target point G1 as the output start timing.

In addition, it is possible for the determination unit 134 to determine the candidate of the output start timing by using the geographical range #211 from "1.8 km" in front of the target point G1 to "500 m" in front of the target point G1 and the traveling distance of "500 m". For example, it is possible for the determination unit 134 to determine the timing when the vehicle VE1 is located at a certain point in the area AR211 from the point of "2.3 km" in front of the target point G1 to the point of "1 km" in front of the target point G1 as the output start timing.

Herein, in a case where the overlap of areas exists between the area AR111 and the area AR211, the content information C111 and C211 may be reproduced and output to interfere with each other, depending on the output start timing, so as to disturb the driving of the vehicle VE1 by the user U1. Therefore, the determination unit 134 determines the output start timing corresponding to the priority of the reproduction output where the output start timing allows the content information to be reproduced and output in the order not to interfere with each other.

As such a process, the determination unit 134 first compares the area AR111 with the area AR211 to detect whether or not the overlap of areas exists between the area AR and the area AR211 (step S108).

Hereinafter, a flow of the processing will be explained in a case where the overlap of the area is detected (step S108; Yes).

The determination unit 134 calculates the priority of the reproduction output for each content information based on the meta information imparted to each content information, or the traveling situation of the vehicle of the distribution destination (step S109). For example, the determination unit 134 may calculate higher priority for the content information where a facility (for example, a store) in a direction that is closer to the traveling direction of the vehicle VE1 is provided as an advertisement target, among the content information C111 and C211. In addition, for example, the determination unit 134 may calculate the higher priority for the content information where the facility that exists on a side of a traveling lane of the vehicle VE1 is provided as the advertisement target, among the content information C111 and C211. Further, for example, the determination unit 134 may calculate the higher priority for the content information where the facility closer to the position of the vehicle VE1 is provided as the advertisement target, among the content information C111 and C211. In addition, the determination unit 134 may calculate the higher priority for the content information with the content having higher urgency of output to the user, among the content information C111 and C211.

Then, the determination unit 134 determines the output start timing corresponding to the priority calculated in step S109 where the output start timing allows the content information to be reproduced and output in the order not to interfere with each other, based on the relationship between the traveling distance of the traveling vehicle of the distribution destination and the overlap of areas according to the reproduction time of each content information (step S 110).

In the example of FIG. 7, the determination unit 134 sets the range position #11-1 corresponding to the traveling distance of "250 m" of the vehicle VE1 traveling at "60 km/h" during the reproduction time of "15 seconds" and the range position #21-1 corresponding to the traveling distance of "500m" of the vehicle VE1 traveling during the reproduction time of "30 seconds" in such a manner that these range positions do not overlap with each other, and according to the priority. Specifically, the determination unit 134 sets the range position #11-1 on the area AR111, and sets the range position #21-1 on the area AR211.

Then, the determination unit 134 determines the timing when the vehicle VE1 is located at the left end position P111 of the range position #11-1 as the output start timing when the reproduction output of the content information C111 is started. In addition, the determination unit 134 determines the timing when the vehicle VE1 is located at the left end position P211 of the range position #21-1 as the output start timing when the reproduction output of the content information C211 is started.

Finally, the output control unit 135 performs the output control over the vehicle of the distribution destination to reproduce and output the content information (step S111). For example, the output control unit 135 distributes the content information C111 to the terminal device 10 of the vehicle VE1 such that the content information C111 is reproduced and output at the output start timing determined by the determination unit 134. Further, the output control unit 135 distributes the content information C211 to the terminal device 10 of the vehicle VE1 such that the content information C211 is reproduced and output at the output start timing determined by the determination unit 134.

Subsequently, a flow of the processing in a case where the overlap of the areas is not detected (step S108; No) will be explained.

In such a case, the determination unit 134 formally determines the candidate of the output start timing determined at step S107 as the output start timing (step S113). For example, the determination unit 134 may determine the timing when the vehicle VE1 is located at any point among the points included in the area AR111 from "2.25 km" in front of the target point G1 to "750 m" in front of the target point G1 as the output start timing. Further, the determination unit 134 may determine the timing when the vehicle VE1 is located at any point among the points included in the area AR211 from "2.3 km" in front of the target point G1 to "1 km" in front of the target point G1 as the output start timing.

### [9. Summary]

The information processing device 100 according to the embodiment acquires the area information that indicates the geographical position or the geographical range where the reproduction output of the content information is to be ended, and determines the output start timing when the reproduction output of the content information is started in the traveling vehicle based on the reproduction time of the content information and the area information. According to such an information processing device 100, it is possible to start the reproduction output of the content information in the vehicle at appropriate timing such that the reproduction output of the content information ends at a predetermined point.

### [10. Hardware Configuration]

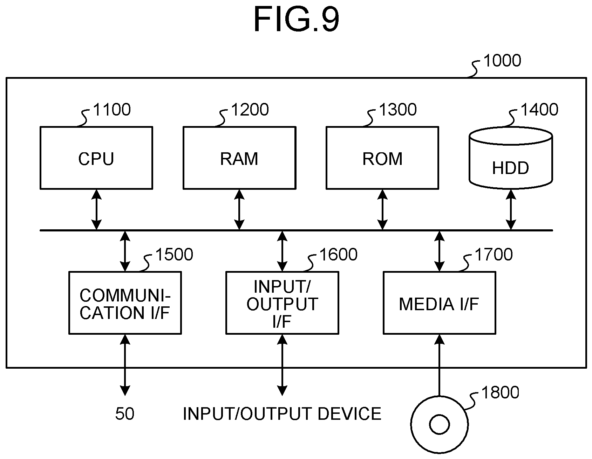

Further, the information processing device 100 in the embodiment which has been described above is implemented by, for example, a computer 1000 with a configuration illustrated in FIG. 9. FIG. 9 is a hardware configuration diagram illustrating an example of the computer that implements a function of the information processing device 100. The computer 1000 includes a CPU 1100, a RAM 1200, a ROM 1300, a HDD 1400, a communication interface (I/F) 1500, an input/output interface (I/F) 1600, and a media interface (I/F) 1700.

The CPU 1100 is operated based on a program stored in the ROM 1300 or the HDD 1400, and performs control of each part. The ROM 1300 stores a boot program which is executed by the CPU 1100 at the time of starting of the computer 1000, a program which depends on hardware of the computer 1000 or the like.

The HDD 1400 stores a program executed by the CPU 1100, data used by such a program, and the like. The communication interface 1500 receives the data from another device through a predetermined communication network and sends the data to the CPU 1100, and transmits the data generated by the CPU 1100 to another device through the predetermined communication network.

The CPU 1100 controls an output device such as a display or a printer, and an input device such as a keyboard or a mouse through the input/output interface 1600. The CPU 1100 acquires the data from the input device through the input/output interface 1600. In addition, the CPU 1100 outputs the generated data to the output device through the input/output interface 1600.

The media interface 1700 reads the program or the data stored a storage medium 1800, and provides the program or the data to the CPU 1100 through the RAM 1200. The CPU 1100 loads such a program on the RAM 1200 from the storage medium 1800 through the media interface 1700, and executes the loaded program. The storage medium 1800 is, for example, an optical recording medium such as a Digital Versatile Disc (DVD), a Phase change rewritable Disk (PD), an optical magnetic recording medium such as a Magneto-Optical disk (MO), a tape medium, a magnetic recording medium, a semiconductor memory, or the like.

For example, in a case where the computer 1000 functions as the information processing device 100 according to the embodiment, the CPU 1100 of the computer 1000 implements a function of the control unit 130 by executing programs loaded on the RAM 1200. Although the CPU 1100 of the computer 1000 reads and executes these programs from the storage medium 1800 the programs, the CPU 1100 may acquire these programs from another device through a predetermined communication network as another example.

### [11. Miscellaneous]

Further, among the processes explained in each embodiment described above, it is also possible to manually execute an entirety or a portion of the process explained to be automatically executed, or, it is possible to automatically execute an entirety or a portion of the process explained to be manually executed by a conventional method. In addition, it is possible to arbitrarily change information including a processing procedure, a specific name, or various kinds of data or parameters illustrated in the text or the drawings described above unless otherwise specified. For example, various types of information illustrated in each of the drawings is not limited to the information illustrated in the drawings.

Further, each component of each device illustrated in the drawings are functionally conceptual, and need not necessarily be physically configured as illustrated in the drawings. That is, a specific mode of dispersion or integration of respective devices is not limited to that illustrated in the drawings, and it is possible to provide a configuration by functionally or physically dispersing or integrating an entirety or a portion thereof at an arbitrary unit according to various types of load or usage conditions.

Further, it is possible to combine the respective embodiments described above appropriately as long as processing contents are not inconsistent.

Hitherto, although some embodiments of the present application have been explained in detail with reference to the drawings, these are examples, and it is possible to carry out the present invention in another form in which various variations and improvements are applied based on knowledge of a person skilled in the art, as well as an aspect described in the column of a disclosure of the invention.

In addition, it is possible to read the words "section, module, unit" which have been described above as "means", "circuit", or the like. For example, it is possible to read the determination unit as a determination means or a determination circuit.

### DESCRIPTION OF REFERENCE NUMERALS

- Sy: Information Processing System
- 100: Information Processing Device
- 120: Storage Unit
- 121: Content Database
- 122: Travel Information Database
- 130: Control Unit
- 131: First Acquisition Unit
- 132: Second Acquisition Unit
- 133: Identification Unit
- 134: Determination Unit
- 135: Output Control Unit

## Claims

1. An information processing device comprising:
an acquisition unit acquiring area information that indicates a geographical position or a geographical range where a reproduction output of content information is to be ended; and
a determination unit determining output start timing when the reproduction output of the content information is to be started in a traveling vehicle based on reproduction time of the content information and the area information.

2. The information processing device according to claim 1,
wherein the acquisition unit acquires the area information that conditions a predetermined point located in front of a target point corresponding to the content information as the geographical position, or a predetermined distance and width located in front of the target point corresponding to the content information as the geographical range.

3. The information processing device according to claim 1 or 2 further comprising
an identification unit identifying a vehicle of a distribution destination to which the content information is distributed based on travel information regarding a traveling situation of the vehicle,
wherein the determination unit determines the output start timing when the reproduction output of the content information is started in an interior of the vehicle of the distribution destination based on the reproduction time of the content information, the area information, and a speed of the vehicle of the distribution destination.

4. The information processing device according to claim 3,
wherein the identification unit extracts the vehicle toward the target point corresponding to the content information in a traveling direction, based on the travel information, and identifies the extracted vehicle as the vehicle of the distribution destination.

5. The information processing device according to claim 4,
wherein the identification unit identifies the vehicle that is predicted to reach the geographical position that is the position indicated by the area information, or the geographical range indicated by the area information in future based on the travel information, and extracts the identified vehicle as the vehicle toward the target point in the traveling direction.

6. The information processing device according to any one of claims 3 to 5,
wherein the identification unit extracts the vehicle traveling on a lane on a side on which the target point corresponding to the content information exists based on the travel information, and identifies the extracted vehicle as the vehicle of the distribution destination.

7. The information processing device according to any one of claims 3 to 6,
wherein the determination unit estimates required time needed for the vehicle of the distribution destination to pass the position indicated by the area information based on predetermined information regarding the vehicle of the distribution destination, and determines the output start timing by further using the estimated required time.

8. The information processing device according to claim 7,
wherein the determination unit estimates the required time needed for the vehicle of the distribution destination to pass the position indicated by the area information based on traffic congestion information at the position indicated by the area information.

9. The information processing device according to claim 7 or 8,
wherein the determination unit estimates a statistical value of the required time which is needed to pass the position indicated by the area information as the required time needed for the vehicle of the distribution destination to pass the position indicated by the area information.

10. The information processing device according to any one of claims 7 to 9,
wherein the determination unit estimates a speed of the vehicle of the distribution destination at the position indicated by the area information based on the required time and the area information, and determines the output start timing by using the estimated speed.

11. The information processing device according to any one of claims 1 to 10, further comprising
a distribution unit distributing the content information to the vehicle such that the content information is reproduced and output at the output start timing determined by the determination unit.

12. An information processing method to be executed by an information processing device, the information processing method comprising:
an acquisition step of acquiring area information that indicates a geographical position or a geographical range where a reproduction output of content information is to be ended; and
a determination step of determining output start timing when the reproduction output of the content information is to be started in a traveling vehicle based on reproduction time of the content information and the area information.

13. An information processing program to be executed by an information processing device provided with a computer, the information processing program causing the computer to function as
an acquisition means for acquiring area information that indicates a geographical position or a geographical range where a reproduction output of content information is to be ended, and
a determination means for determining output start timing when the reproduction output of the content information is to be started in a traveling vehicle based on reproduction time of the content information and the area information.
